# EUROPEAN PATENT SPECIFICATION

(11) **EP 4 489 265 B1**
(45) Date of publication and mention of the grant of the patent: **16.09.2026**
(21) Application number: 24158511.6
(22) Date of filing: 20.02.2024
(51) Int. Cl.: H02K 1/2786

(54) **MAGNET, MOTOR INCLUDING THEREOF, AND WASHING MACHINE INCLUDING THEREOF**
MAGNET, MOTOR DAMIT UND WASCHMASCHINE DAMIT
AIMANT, MOTEUR COMPRENANT CELUI-CI ET MACHINE À LAVER COMPRENANT CELUI-CI

(30) Priority: 04.07.2023 KR 20230086341
(43) Date of publication of application: 08.01.2025
(73) Proprietor: LG Electronics Inc., Yeongdeungpo-gu Seoul 07336 (KR)
(72) Inventor: EUM, Sangjoon, 08592 Seoul (KR); CHO, Jeonghyun, 08592 Seoul (KR); PARK, Songe, 08592 Seoul (KR); JEONG, Gyujong, 08592 Seoul (KR); HA, Kyungho, 08592 Seoul (KR)
(74) Representative: Vossius & Partner Patentanwälte Rechtsanwälte mbB

(56) References cited:
- WO-A1-2012/033202
- KR-A- 20120 132 184
- US-A1- 2022 200 408

## Description

### BACKGROUND OF THE INVENTION

### Field of the Invention

The present disclosure relates to a magnet, a motor including the same, and a washing machine including the same, more specifically, to a magnet for improving a back electromotive force, a motor including the same, and a washing machine including the same.

### Description of the Related Art

In general, washing machines include an outer tub containing wash water, and an inner tub rotatably provided in the outer tub to accommodate laundry cloth such as clothes, and washing and spin-drying of the laundry cloth are performed as the inner tub rotates.

The washing machines may be classified into a top loading type designed so that a rotation center of the inner tub is formed in a direction perpendicular to a floor and the laundry cloth can be inserted from a top, and a front loading type designed so that the rotation center of the inner tub is formed in a direction horizontal to the floor or is inclined to be lowered toward a back end, and the laundry cloth can be inserted from the front.

The top loading type washing machine can be largely classified into an agitator type and a pulsator type, and the agitator type does the laundry by rotating a laundry rod towering in the center of the inner tub, and the pulsator type does the laundry by rotating a disk-shaped pulsator formed in the lower part of the inner tub.

The front loading type is commonly referred to as a 'drum washing machine', and a lifter is provided on an inner circumferential surface of the inner tub, and as the drum rotates, the lifter lifts the laundry cloth and drops it to perform washing.

The washing machine is driven in two main operating modes (washing mode and spin-drying mode) with different operating conditions.

In order to satisfy both of the above two main operating modes, the washing machine is provided with a clutch, and operates an output shaft at low speed and high torque with a gear ratio of n:1 (washing mode), or operates the output shaft at high speed and low torque with a gear ratio of 1:1 (spin-drying mode).

In this case, there is a structure that lowers power consumption and improves the operating efficiency of the motor by adding a planetary gear.

In general, washing machines are equipped with an outer rotor motor. In the outer rotor motor, a stator wound by coil is installed inside, and a rotor is arranged radially outside the stator, as if a magnet surrounds the coil of the stator. The rotor includes a plurality of magnets arranged radially.

Before becoming a magnet, electrons in a typical magnetic material are randomly arranged. In order to magnetize such a magnetic material, a permanent magnet can be formed by first orienting the electron array within the magnetic material in a certain direction and then going through a magnetization process to magnetically polarize it by applying an external magnetic field.

A method of concentrating the magnetic flux distribution is being used to increase the magnitude of the back electromotive force based on the same magnet usage, but there was a problem of cracks occurring in the magnet due to the concentration of the magnetic flux distribution.

### [Prior technical literature]

### [Patent document]

Related Art 1: Korean Patent Publication No. KR10-2020-0089604
Patent document WO 2012/033202 A1 further represents the related art.

### SUMMARY OF THE INVENTION

A problem to be solved by the present disclosure is to provide a magnet capable of reducing the possibility of cracks occurring in the magnet while increasing a back electromotive force of a motor, a motor including the same, and a washing machine including the same.

In addition, a problem to be solved by the present disclosure is to provide a magnet capable of reducing the material cost of the motor while increasing a back electromotive force of a motor, a motor including the same, and a washing machine including the same.

In addition, a problem to be solved by the present disclosure is to provide a magnet capable of improving the space efficiency of a motor applied to a washing machine, a motor including the same, and a washing machine including the same.

The invention is defined in the independent claims. Dependent claims describe preferred embodiments.

A magnet according to one aspect of the present disclosure for achieving the above object comprises at least one polar region formed in an arc shape and arranged side by side in a circumferential direction, wherein the at least one polar region has an each magnetic focus center that is different from a center of an inner diameter of the at least one polar region.

In this case, the at least one polar region satisfies the following equation, $X = \frac{{d}_{m}}{{d}_{b}}$

Where, dₘ is a distance from a straight line connecting both ends of a magnetic center line of the at least one polar region to a central region of the magnetic center line of the at least one polar region, and d_{b} is a distance from a straight line connecting both ends of a magnetic center line of the at least one polar region to a central region of the magnetic center line of the at least one polar region when the at least one polar region has a magnetic focus center equal to the center of the inner diameter of the at least one polar region.

In addition, when a number of the at least one polar region is 1, X<7.5, when the number of the at least one polar region is 2, X<6, when the number of the at least one polar region is 3, X<4.5, and when the number of the at least one polar region is 4, X<3.5.

Through this, it is possible to reduce the possibility of cracks occurring in the magnet while increasing the back electromotive force of the motor.

In addition, the db is a magnet may satisfy the following equation, ${d}_{b} = \frac{{r}_{i} + {r}_{o}}{2} - \sqrt{{\left(\frac{{r}_{i} + {r}_{o}}{2}\right)}^{2} - {\left(\frac{{r}_{o} - {r}_{i}}{2 p}\right)}^{2}}$

Where, rᵢ may be an inner radius of the at least one polar region, rₒ may be an outer radius of the at least one polar region, and p may be a number of the at least one polar region.

In addition, when the number of the at least one polar region is 1, 6<X, when the number of the at least one polar region is 2, 4.5<X, when the number of the at least one polar region is 3, 3.5<X, and when the number of the at least one polar region is 4, 2.5<X.

Through this, it is possible to reduce the material cost of the motor while increasing the back electromotive force of the motor.

In addition, the at least one polar region is plural, and distances between the each magnetic focus center and the at least one polar region may be equal to each other. In this case, a circumferential distance between the magnetic focus centers may be equal to each other. Additionally, neighboring polar regions may have different polarities.

A motor according to one aspect of the present disclosure for achieving the above object may comprise a stator, and a rotor including a rotor core disposed radially outside the stator, and a plurality of magnets disposed on an inner surface of the rotor core and facing the stator.

In this case, the plurality of magnets each may comprise at least one polar region formed in an arc shape and arranged side by side in a circumferential direction, wherein the at least one polar region may have an each magnetic focus center that is different from a center of an inner diameter of the at least one polar region.

In addition, the at least one polar region may satisfies the equation, $x = \frac{{d}_{m}}{{d}_{b}}$.

Where, dₘ is a distance from a straight line connecting both ends of a magnetic center line of the at least one polar region to a central region of the magnetic center line of the at least one polar region, and d_{b} is a distance from a straight line connecting both ends of a magnetic center line of the at least one polar region to a central region of the magnetic center line of the at least one polar region when the at least one polar region has a magnetic focus center equal to the center of the inner diameter of the at least one polar region.

In this case, when a number of the at least one polar region is 1, X<7.5, when the number of the at least one polar region is 2, X<6, when the number of the at least one polar region is 3, X<4.5, and when the number of the at least one polar region is 4, X<3.5.

Through this, it is possible to reduce the possibility of cracks occurring in the magnet while increasing the back electromotive force of the motor.

In addition, when a number of the at least one polar region is 1, a number of the plurality of magnets may be 48, when the number of the at least one polar region is 2, the number of the plurality of magnets may be 24, when the number of at least one polar region is 3, the number of the plurality of magnets may be 24, and when the number of the at least one polar region is 4, the number of the plurality of magnets may be 12.

Through this, it is possible to improve the space efficiency of the motor applied to the washing machine.

Through the present disclosure, it is possible to provide a magnet capable of reducing the possibility of cracks occurring in the magnet while increasing a back electromotive force of a motor, a motor including the same, and a washing machine including the same.

In addition, through the present disclosure, it is possible to provide a magnet capable of reducing the material cost of the motor while increasing a back electromotive force of a motor, a motor including the same, and a washing machine including the same.

In addition, through the present disclosure, it is possible to provide a magnet capable of improving the space efficiency of a motor applied to a washing machine, a motor including the same, and a washing machine including the same.

### BRIEF DESCRIPTION OF THE DRAWINGS

FIGS. 1 and 2 are perspective views of a washing machine according to an embodiment of the present disclosure.
FIG. 3 is a perspective view of a washing machine driving system according to an embodiment of the present disclosure.
FIG. 4 is an exploded perspective view of a washing machine driving system according to an embodiment of the present disclosure.
FIG. 5 is an exploded perspective view of a washing machine driving system according to another embodiment of the present disclosure.
FIG. 6 is a plan view of a rotor according to an embodiment of the present disclosure.
FIGS. 7 to 10 are plan views of a magnet according to an embodiment of the present disclosure.
FIG. 11 is a plan view of a rotor according to an embodiment of the present disclosure.
FIG. 12 is an enlarged view of portion A of FIG. 11.
FIG. 13 is a plan view of a polar region according to an embodiment of the present disclosure.
FIG. 14 is a graph showing a rate of increase in back electromotive force of a motor with respect to a polar anisotropy coefficient of a magnet according to an embodiment of the present disclosure.
FIG. 15 is a graph showing a rate of change of material cost of a stator unit with respect to a polar anisotropy coefficient of a magnet according to an embodiment of the present disclosure.
FIG. 16 is a graph showing a manufacturing cost ratio of a rotor with respect to the number of polar region in one magnet according to an embodiment of the present disclosure.
FIG. 17 is a graph showing a rate of change of material cost of a motor with respect to a polar anisotropy coefficient of a magnet according to an embodiment of the present disclosure.
FIG. 18 is a graph showing a rate of increase in back electromotive force of a motor with respect to a polar anisotropy coefficient of a magnet according to an embodiment of the present disclosure.

### DETAILED DESCRIPTION OF THE EMBODIMENTS

Hereinafter, embodiments disclosed in the present disclosure will be described in detail with reference to the accompanying drawings, however, regardless of the reference numerals, the same or similar components will be given the same reference numerals and redundant description thereof will be omitted.

In describing the embodiments disclosed in the present disclosure, when a component is referred to as being "connected" or "accessed" to other component, it may be directly connected or accessed to the other component, however, it may be understood that other components may be present in the middle.

In addition, in describing the embodiments disclosed in the present disclosure, when it is determined that the detailed description of the related known technology may obscure the subject matter of the embodiments disclosed in the present disclosure, the detailed description thereof will be omitted. In addition, the accompanying drawings are only for easily understanding the embodiments disclosed in the present disclosure, and it should be understood that the accompanying drawings include all changes, equivalents, and substitutes included in the scope of the appended claims.

On the other hand, terms of disclosure may be replaced with terms such as document, specification, description.

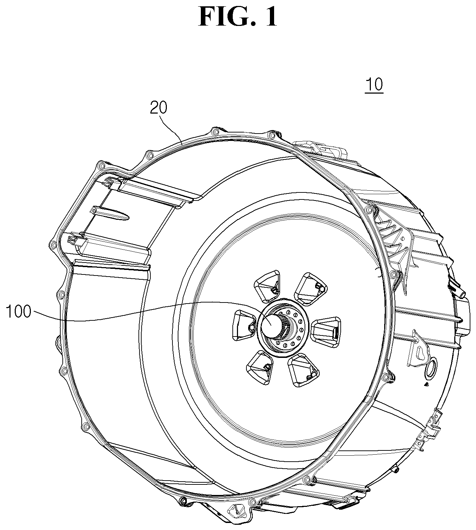

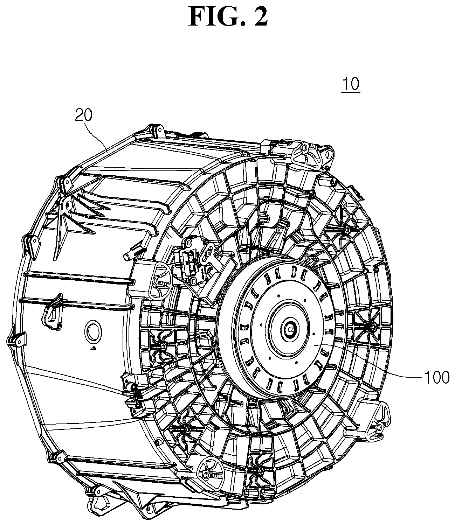

FIGS. 1 and 2 are perspective views of a washing machine according to an embodiment of the present disclosure.

Referring to FIGS. 1 and 2, a washing machine 10 according to an embodiment of the present disclosure may include an outer tub 20 and a washing machine driving system 100, but may be implemented excluding some of these configurations, and additional configurations other than these are not excluded.

The washing machine 10 according to an embodiment of the present disclosure will be described using a front loading type designed so that a rotation center of an inner tub is formed in a direction horizontal to the floor or is inclined to be lowered toward a back end, and the laundry cloth can be inserted from the front as an example, but the detailed configuration of the washing machine driving system 100 can also be applied to a top loading type washing machine.

The outer tub 20 may have a cylindrical shape with the top or front open. An inner tub (not shown) may be placed inside the outer tub 20. The outer tub 20 may be made of plastic material. The inner tub may be connected to an output shaft 110 of the washing machine driving system 100. The washing machine driving system 100 is coupled to the inner tub of the washing machine 10 and can rotate the inner tub.

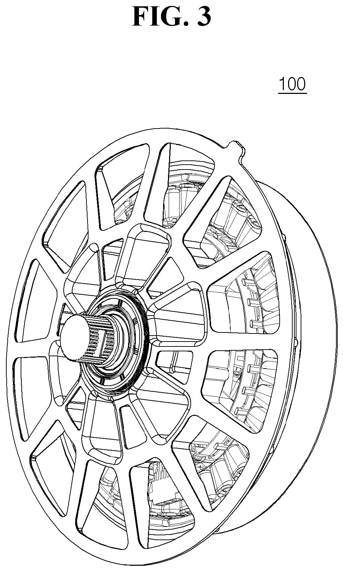

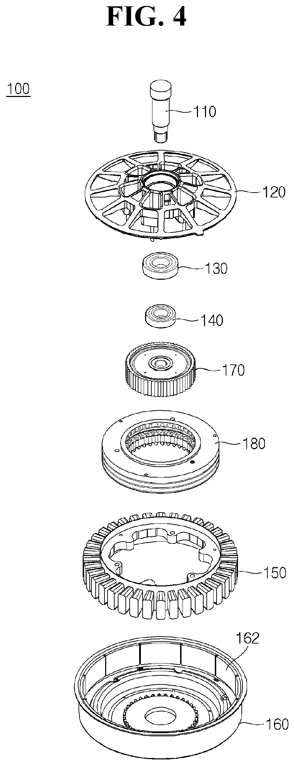

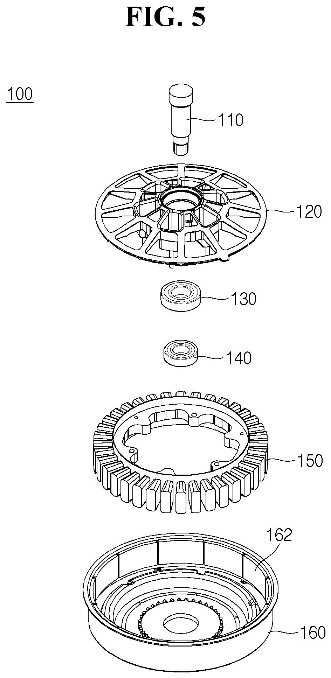

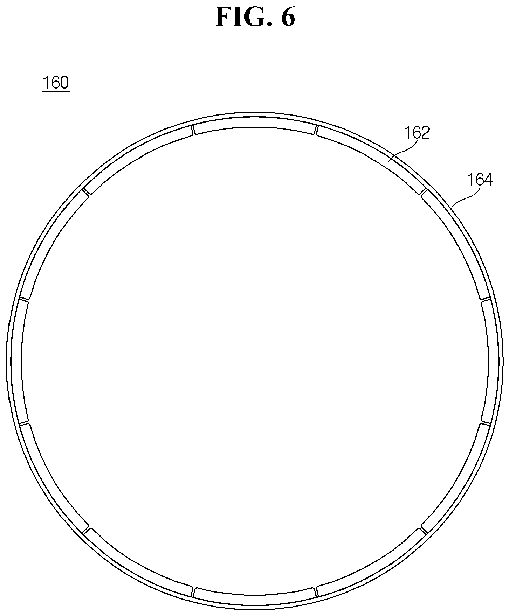

FIG. 3 is a perspective view of a washing machine driving system according to an embodiment of the present disclosure. FIG. 4 is an exploded perspective view of a washing machine driving system according to an embodiment of the present disclosure. FIG. 5 is an exploded perspective view of a washing machine driving system according to another embodiment of the present disclosure. FIG. 6 is a plan view of a rotor according to an embodiment of the present disclosure.

Referring to FIGS. 3, 4, and 6, a washing machine driving system 100 according to an embodiment of the present disclosure may include an output shaft 110, a housing 120, a first bearing 130, a second bearing 140, a stator 150, a rotor 160, a planetary gear set 170, and a clutch 180, but may be implemented excluding some of these configurations, and additional configurations other than these are not excluded.

As shown in FIG. 5, the washing machine driving system 100 may be implemented excluding the planetary gear set 170 and the clutch 180.

The output shaft 110 may extend in an axial direction. The output shaft 110 may be coupled to the inner tub. The output shaft 110 may be rotatably coupled to the housing 120. The output shaft 110 may be bearing-coupled to the housing 120. The output shaft 110 may be coupled to the planetary gear set 170.

The inner tub may be coupled to an upper region of the output shaft 110. A central region of the output shaft 110 may be bearing-coupled to the housing 120. The first bearing 130 and the second bearing 140 may be disposed between the central region of the output shaft 110 and the housing 120.

A lower region of the output shaft 110 may be disposed within the rotor 160. The lower region of the output shaft 110 may be coupled to the planetary gear set 170. A diameter of the lower region of the output shaft 110 may be smaller than a diameter of the central region. An axial length of the lower region of the output shaft 110 may be shorter than an axial length of the central region of the output shaft 110.

The output shaft 110 may be rotatably coupled to the housing 120. The inner tub and the outer tub 20 may be disposed on an upper part of the housing 120. The housing 120 may be coupled to the outer tub 20. The stator 150, the rotor 160, the planetary gear set 170, and the clutch 180 may be disposed in the lower part of the housing 120. The housing 120 may be coupled to the stator 150. The housing 120 may be made of plastic material.

The first bearing 130 may be disposed between the output shaft 110 and the housing 120. The first bearing 130 may bearing-couple the output shaft 110 to the housing 120. The first bearing 130 may rotatably couple the output shaft 110 to the housing 120. The first bearing 130 may extend in the circumferential direction. The first bearing 130 may be disposed on the second bearing 140.

The second bearing 140 may be disposed between the output shaft 110 and the housing 120. The second bearing 140 may bearing-couple the output shaft 110 to the housing 120. The second bearing 140 may rotatably couple the output shaft 110 to the housing 120. The second bearing 140 may extend in the circumferential direction. The second bearing 140 may be disposed below the first bearing 130. The second bearing 140 may be disposed on the planetary gear set 170. The second bearing 140 may be disposed radially inside the stator 150.

The stator 150 may be coupled to the housing 120. The stator 150 may be disposed inside the rotor 160. The stator 150 may face the rotor 160. The stator 150 may be disposed on the clutch 180. The stator 150 may include a coupling portion coupled to the housing 120, a stator unit disposed radially outside the coupling portion, and a coil wound around the stator unit. The stator 150 may rotate the rotor 160 through electromagnetic interaction.

The rotor 160 may face the stator 150. The rotor 160 may be coupled to the planetary gear set 170. Through this, the rotor 160 may supply rotational force to the output shaft 110.

The rotor 160 may include a rotor core 164 disposed on the radial outer side of the stator 150, and a magnet 162 disposed on the inner surface of the rotor core 164. The magnet 162 may face the stator 150. The magnet 162 may face the stator unit of the stator 150. When current is supplied to the coil of the stator 150, the magnet 162 may rotate in one direction or the other direction due to electromagnetic interaction.

The magnet 162 may include a plurality of magnets spaced apart in the circumferential direction. The plurality of magnets may be disposed radially with respect to a central region of the rotor core 164. Each of the plurality of magnets may face a plurality of stator units spaced apart in the circumferential direction.

The stator 150 and the rotor 160 may be referred to as a 'motor'.

The planetary gear set 170 may be spline-coupled to an outer circumferential surface of the output shaft 110. The planetary gear set 170 may be coupled to the rotor 160. The planetary gear set 170 may rotate integrally with the rotor 160. The planetary gear set 170 may transmit the rotational force of the rotor 160 to the output shaft 110.

For example, the planetary gear set 170 may transmit the rotational force of the rotor 160 to the output shaft 110 by reducing the speed at a gear ratio of 1:1 or n:1, or the rotational force of the rotor 160 to the output shaft 110 at a gear ratio of 1:1. Through this, the washing mode and spin-drying mode can be implemented without stopping between the end of washing and the start of spin-drying.

The clutch 180 may be disposed between the motors 150 and 160 and the planetary gear set 170. A portion of the clutch 180 may be spline-coupled to the planetary gear set 170, and another portion may be coupled to the stator 150. The clutch 180 may fix or unfix some components of the planetary gear set 170. Through this, the clutch 180 may allow the planetary gear set 170 to transmit the rotational force of the rotor 160 to the output shaft 110 at the gear ratio of 1:1, or the planetary gear set 170 to transmit the rotational force of the rotor 160 to the output shaft 110 by reducing the speed at the gear ratio of 1:1.

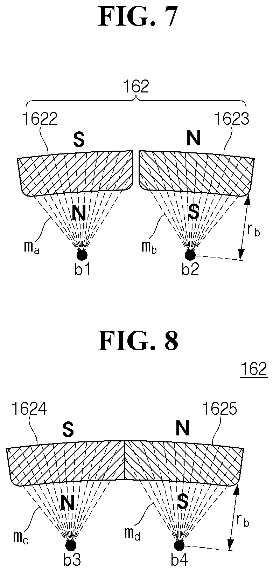

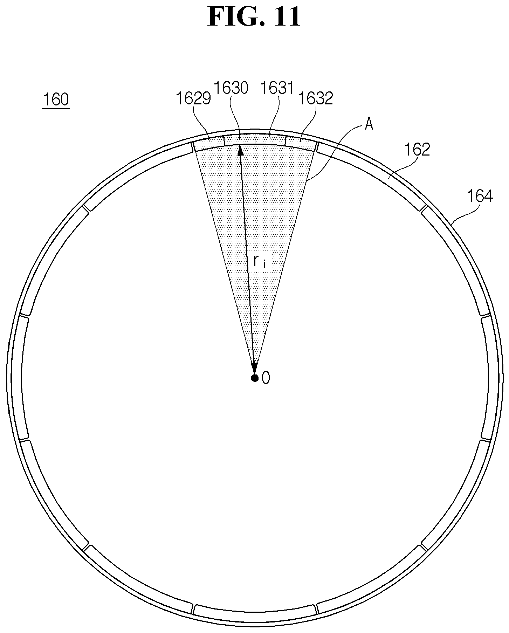

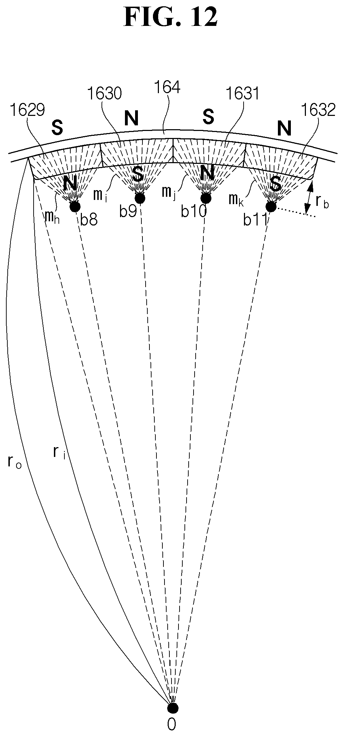

FIGS. 7 to 10 are plan views of a magnet according to an embodiment of the present disclosure. FIG. 11 is a plan view of a rotor according to an embodiment of the present disclosure. FIG. 12 is an enlarged view of portion A of FIG. 11.

The magnet 162 according to an embodiment of the present disclosure may also be applied to the washing machine 10 driven without the planetary gear set 170 and the clutch 180, as shown in FIG. 5.

Referring to FIG. 7, the magnet 162 may include single polar regions 1622 and 1623. The single polar regions 1622 and 1623 may be spaced apart in the circumferential direction. The single polar regions 1622 and 1623 may be arranged side by side in the circumferential direction. The single polar regions 1622 and 1623 disposed adjacent to each other may have different polarities. For example, an inner surface of a first polar region 1622 may have an N pole, and an inner surface of a second polar region 1623, which is spaced apart from the first polar region 1622 in the circumferential direction, may have an S pole.

The single polar regions 1622 and 1623 may be formed overall into an arc shape. The adjacent single polar regions 1622 and 1623 may have an each magnetic focus centers b1 and b2 that are different from a center O of an inner diameter r-i of the single polar regions 1622 and 1623. For example, a first magnetic focus center b1 may be a focus center of a first magnetic orientation (ma) of the first polar region 1622, and a second magnetic focus center b2 may be a focus center of a second magnetic orientation (mb) of the second polar region 1623. Distances (rb) between the magnetic focus centers b1 and b2 of adjacent single polar regions 1622 and 1623 and the single polar regions 1622 and 1623 may be equal to each other.

In one embodiment of the present disclosure, a case where the magnet 162 is formed of the single polar regions 1622 and 1623 may be defined as a 'one-pole magnet'.

Referring to FIG. 8, the magnet 162 may include two polar regions 1624 and 1625. The two polar regions 1624 and 1625 may be arranged side by side in the circumferential direction. The two polar regions 1624 and 1625 may have different polarities. For example, an inner surface of the third polar region 1624 may have an N pole, and an inner surface of the fourth polar region 1625 may have an S pole.

The two polar regions 1624 and 1625 may be formed overall into an arc shape. The adjacent two polar regions 1624 and 1625 may have an each magnetic focus centers b3 and b4 that are different from a center O of an inner diameter r-i of the two polar regions 1624 and 1625. For example, a third magnetic focus center b3 may be a focus center of a third magnetic orientation (mc) of the third polar region 1624, and a fourth magnetic focus center b4 may be a focus center of a fourth magnetic orientation (md) of the fourth polar region 1625. Distances rb between the magnetic focus centers b3 and b4 of the two polar regions 1624 and 1625 and the two polar regions 1624 and 1625 may be equal to each other.

In one embodiment of the present disclosure, a case where the magnet 162 is formed of the two polar regions 1624 and 1625 may be defined as a 'two-pole magnet'.

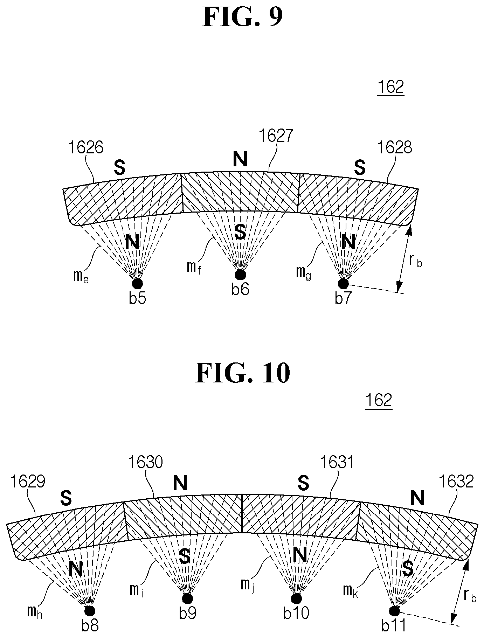

Referring to FIG. 9, the magnet 162 may include three polar regions 1626, 1627, and 1628. The three polar regions 1626, 1627, and 1628 may be arranged side by side in the circumferential direction. The three polar regions 1626, 1627, and 1628 may have different polarities. For example, an inner surface of the fifth polar region 1626 may have an N pole, and an inner surface of the sixth polar region 1627 may have an S pole, and an inner surface of the seventh polar region 1628 may have an N pole.

The three polar regions 1626, 1627, and 1628 may be formed overall into an arc shape. The adjacent three polar regions 1626, 1627, and 1628 may have an each magnetic focus centers b5, b6, and b7 that are different from a center O of an inner diameter r-i of the three polar regions 1626, 1627, and 1628. For example, a fifth magnetic focus center b5 may be a focus center of a fifth magnetic orientation (me) of the fifth polar region 1626, a sixth magnetic focus center b6 may be a focus center of a sixth magnetic orientation (mf) of the sixth polar region 1627, and a seventh magnetic focus center b7 may be a focus center of a seventh magnetic orientation (mg) of the seventh polar region 1628. Distances rb between the magnetic focus centers b5, b6, and b7 of the three polar regions 1626, 1627, and 1628 and the three polar regions 1626, 1627, and 1628 may be equal to each other. The circumferential distances between the magnetic focus centers b5, b6, and b7 of the three polar regions 1626, 1627, and 1628 and adjacent magnetic focus centers may be equal to each other.

In one embodiment of the present disclosure, a case where the magnet 162 is formed of the three polar regions 1626, 1627, and 1628 may be defined as a 'three-pole magnet'.

Referring to FIGS. 10 to 12, the magnet 162 may include four polar regions 1629, 1630, 1631, and 1632. The four polar regions 1629, 1630, 1631, and 1632 may be arranged side by side in the circumferential direction. The four polar regions 1629, 1630, 1631, and 1632 may have different polarities. For example, an inner surface of the eighth polar region 1629 may have an N pole, and an inner surface of the ninth polar region 1630 may have an S pole, an inner surface of the 10th polar region 1631 may have an N pole, an inner surface of the 11th polar region 1632 may have an S pole. The four polar regions 1629, 1630, 1631, and 1632 may be formed overall into an arc shape.

The adjacent four polar regions 1629, 1630, 1631, and 1632 may have an each magnetic focus centers b8, b9, b10, and b11 that are different from a center O of an inner diameter r-i of the four polar regions 1629, 1630, 1631, and 1632. For example, an eighth magnetic focus center b8 may be a focus center of an eighth magnetic orientation (mh) of the eighth polar region 1629, a ninth magnetic focus center b9 may be a focus center of a ninth magnetic orientation (mi) of the ninth polar region 1630, a tenth magnetic focus center b10 may be a focus center of a tenth magnetic orientation (mj) of the tenth polar region 1631, and an 11th magnetic focus center b11 may be a focus center of an 11th magnetic orientation (mk) of the 11th polar region 1632.

In this case, the distances rb between the magnetic focus centers b8, b9, b10, and b11 of the four polar regions 1629, 1630, 1631, and 1632 and the four polar regions 11629, 1630, 1631, and 1632 may be equal to each other. The circumferential distances between the magnetic focus centers b8, b9, b10, and b11 of the four polar regions 1629, 1630, 1631, and 1632 and adjacent magnetic focusing centers may be equal to each other.

In one embodiment of the present disclosure, a case where the magnet 162 is formed of the four polar regions 1629, 1630, 1631, and 1632 may be defined as a 'four -pole magnet'.

In one embodiment of the present disclosure, when the number of the at least one polar region 1622 ad 1623 is 1, the number of the plurality of magnets spaced apart in the circumferential direction may be 48, when the number of the at least one polar region 1624 and 1625 is 2, the number of the plurality of magnets spaced apart in the circumferential direction may be 24, when the number of at least one polar region 1626, 1627, and 1628 is 3, the number of the plurality of magnets magnets spaced apart in the circumferential direction may be 24, and when the number of the at least one polar region 1629, 1630, 1631, and 1632 is 4, the number of the plurality of magnets spaced apart in the circumferential direction may be 12. Through this, it is possible to improve the space efficiency of the motors 150 and 160 applied to the washing machine 10.

In one embodiment of the present disclosure, it has been described as an example that the number of the at least one polar region 1622, 1623, 1624, 1625, 1626, 1627, 1628, 1629, 1630, 1631, and 1632 is 1 to 4, but cases of 5 or more are not excluded.

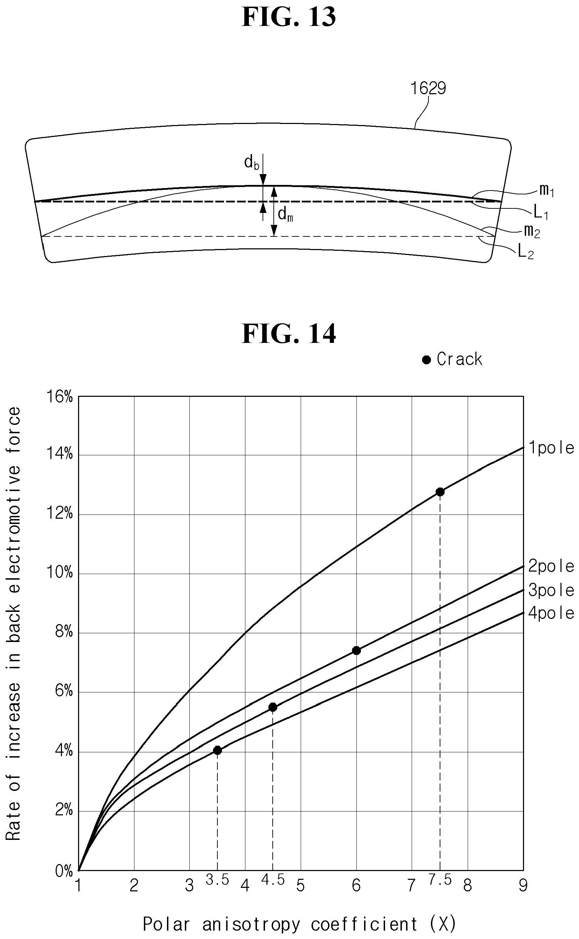

FIG. 13 is a plan view of a polar region according to an embodiment of the present disclosure.

The polar anisotropy coefficient (X) will be described with reference to FIG. 13.
dm means a distance from a straight line (L2) connecting both ends of a magnetic center line (m2) of the at least one polar region (1622, 1623, 1624, 1625, 1626, 1627, 1628, 1629, 1630, 1631, 1632) to a central region of the magnetic center line (m2) of the at least one polar region (1622, 1623, 1624, 1625, 1626, 1627, 1628, 1629, 1630, 1631, 1632).
db means a distance from a straight line (L1) connecting both ends of a magnetic center line (m1) of the at least one polar region (1622, 1623, 1624, 1625, 1626, 1627, 1628, 1629, 1630, 1631, 1632) to a central region of the magnetic center line (m1) of the at least one polar region (1622, 1623, 1624, 1625, 1626, 1627, 1628, 1629, 1630, 1631, 1632) when the at least one polar region (1622, 1623, 1624, 1625, 1626, 1627, 1628, 1629, 1630, 1631, 1632) has a magnetic focus center equal to the center (O) of the inner diameter (ri) of the at least one polar region (1622, 1623, 1624, 1625, 1626, 1627, 1628, 1629, 1630, 1631, 1632).

In FIG. 13, dm and db are explained based on vertical lines spaced left and right, but this is only an illustration to aid understanding, in reality, dm and db may be interpreted to mean lengths based on vertical lines that overlap each other.

Here, db may satisfy Equation 1.${d}_{b} = \frac{{r}_{i} + {r}_{o}}{2} - \sqrt{{\left(\frac{{r}_{i} + {r}_{o}}{2}\right)}^{2} - {\left(\frac{{r}_{o} - {r}_{i}}{2 p}\right)}^{2}}$

Where, rᵢ may mean an inner radius of the at least one polar region (1622, 1623, 1624, 1625, 1626, 1627, 1628, 1629, 1630, 1631, 1632), rₒ may mean an outer radius of the at least one polar region(1622, 1623, 1624, 1625, 1626, 1627, 1628, 1629, 1630, 1631, 1632), and p may mean the number of the at least one polar region(1622, 1623, 1624, 1625, 1626, 1627, 1628, 1629, 1630, 1631, 1632).

The polar anisotropy coefficient (X) is a coefficient that determines how close the magnetic focus center of the at least one polar region (1622, 1623, 1624, 1625, 1626, 1627, 1628, 1629, 1630, 1631, 1632) is located to the at least one polar region(1622, 1623, 1624, 1625, 1626, 1627, 1628, 1629, 1630, 1631, 1632), and satisfies Equation 2 below.$X = \frac{{d}_{m}}{\overline{{d}_{b}}}$

FIG. 14 is a graph showing a rate of increase in back electromotive force of a motor with respect to a polar anisotropy coefficient of a magnet according to an embodiment of the present disclosure.

Referring to FIG. 14, it can be seen the rate of increase in back electromotive force with respect to the polar anisotropy coefficient (X) of the magnet 162. As the polar anisotropy coefficient (X) of the magnet 162 increases, the rate of increase in back electromotive force of the motors 150 and 160 increases. Here, the rate of increase in back electromotive force refers to a ratio of the back electromotive force when the polar anisotropy coefficient changes compared to the back electromotive force when the polar anisotropy coefficient (X) is 1. The closer the magnetic focus center (b1, b2, b3, b4, b5, b6, b7, b8, b9, b10, b11) of the at least one polar region (1622, 1623, 1624, 1625, 1626, 1627, 1628, 1629, 1630, 1631, 1632) approaches the at least one polar polar region (1622, 1623, 1624, 1625, 1626, 1627, 1628, 1629, 1630, 1631, 1632), the higher the polar anisotropy coefficient (X) may be.

As the polar anisotropy coefficient (X) increases, the orientation lines (electron arrangement of magnetic material) converge toward the circumferential center of the polar region, since the rigidity of both ends in the circumferential direction of the polar region weakens, cracks may occur in the magnet 162. That is, when the polar anisotropy coefficient (X) continues to increase, cracks may occur in the magnet 162.

Specifically, if the magnet 162 is a 1-pole magnet, cracks may occur in the magnet 162 when the polar anisotropy coefficient (X) reaches 7.5, if the magnet 162 is a 2-pole magnet, cracks may occur in the magnet 162 when the polar anisotropy coefficient (X) reaches 6, if the magnet 162 is a 3-pole magnet, cracks may occur in the magnet 162 when the polar anisotropy coefficient (X) reaches 4.5, and if the magnet 162 is a 4-pole magnet, cracks may occur in the magnet 162 when the polar anisotropy coefficient (X) reaches 3.5.

Therefore, when the number of the at least one polar region 1622 or 1623 of the magnet 162 is 1, it is preferable that the polar anisotropy coefficient (X) is less than 7.5, when the number of the at least one of the polar regions 1624 and 1625 is 2, it is preferable that the polar anisotropy coefficient (X) is less than 6, when the number of the at least one polar regions 1626, 1627, and 1628 is 3, it is preferable that the polar anisotropy coefficient (X) is less than 4.5, and when the number of the at least four polar regions 1629, 1630, 1631, and 1632 is 4, it is preferable that the polar anisotropy coefficient (X) is less than 3.5.

Through this, it is possible to prevent damage to the product by reducing the possibility of cracks occurring in the magnet 162 while increasing the back electromotive force of the motors 150 and 160.

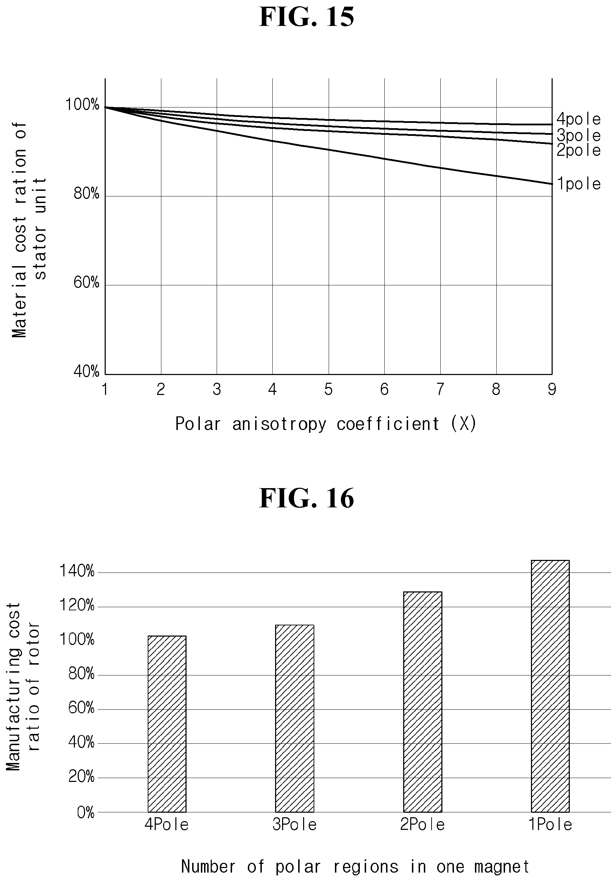

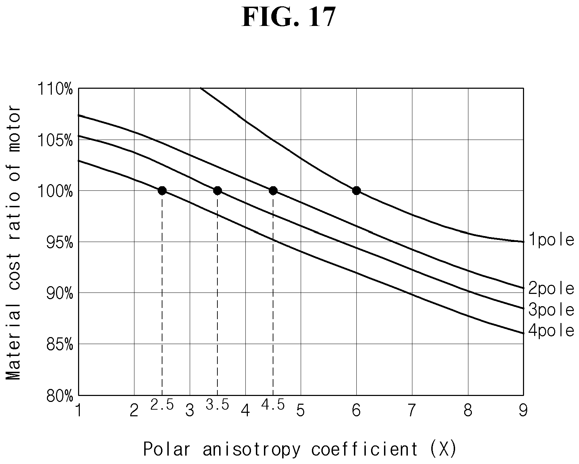

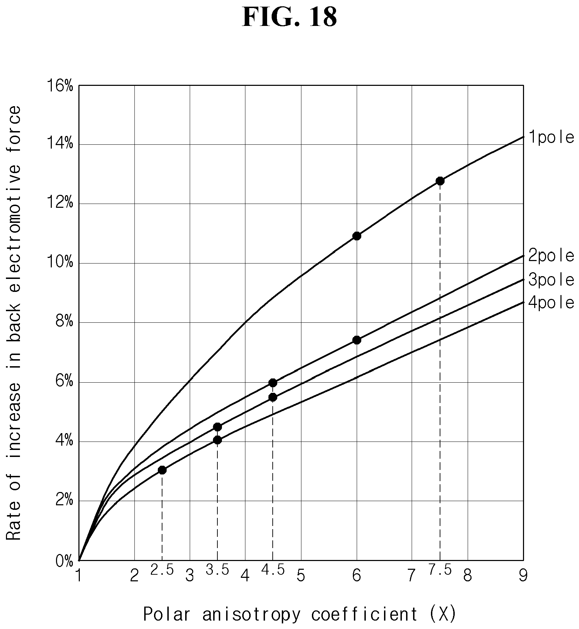

FIG. 15 is a graph showing a rate of change of material cost of a stator unit with respect to a polar anisotropy coefficient of a magnet according to an embodiment of the present disclosure. FIG. 16 is a graph showing a rate of change of manufacturing cost of a rotor with respect to the number of polar region in one magnet according to an embodiment of the present disclosure. FIG. 17 is a graph showing a rate of change of material cost of a motor with respect to a polar anisotropy coefficient of a magnet according to an embodiment of the present disclosure. FIG. 18 is a graph showing a rate of increase in back electromotive force of a motor with respect to a polar anisotropy coefficient of a magnet according to an embodiment of the present disclosure.

In FIG. 14, it was confirmed that as the polar anisotropy coefficient (X) increases, the back electromotive force of the motors 150 and 160 increases. In general, as a stacking height of the stator core in the core of the same rotor 160 decreases, the back electromotive force of the motor decreases.

When increasing the polar anisotropy coefficient (X) to 1 or more, it can be set to a level equivalent to the back electromotive force when the polar anisotropy coefficient (X) is set to 1, by reducing the stacking height of the stator core. In other words, when the polar anisotropy coefficient (X) is set to 1 or more, it has an effect of reducing the material cost of the stator unit by reducing the stacking height of the stator core.

Referring to FIG. 15, can be seen that the change rate of the material cost of the stator unit of the motors 150 and 160 according to the polar anisotropy coefficient (X) of the motors 150 and 160. As the polar anisotropy coefficient (X) increases, the back electromotive force of the motors 150 and 160 increases, and it can be seen that the material cost of the stator unit is reduced because stacking of the stator units of the motors 150 and 160 can be reduced. Here, the material cost ratio of the stator unit refers to a stator unit material cost ratio when the polar anisotropy coefficient (X) changes compared to the stator unit material cost when the polar anisotropy coefficient (X) is set to 1.

Referring to FIG. 16, it can be seen that the manufacturing cost ratio of the rotor 160 to the number of polar regions (1622, 1623, 1624, 1625, 1626, 1627, 1628, 1629, 1630, 1631, 1632) in one magnet. Here, the manufacturing cost ratio of the rotor 160 refers to the manufacturing cost of the rotor when the number of polar regions in one magnet 162 is less than 6 compared to the manufacturing cost of the rotor 160 when one magnet 162 consists of 6 polar regions.

Even if the number of polar regions (1622, 1623, 1624, 1625, 1626, 1627, 1628, 1629, 1630, 1631, 1632) of one magnet 162 changes in the rotor 160 of the same size, the overall mass of the magnets 162 in the rotor 160 does not change significantly.

However, as the number of polar regions (1622, 1623, 1624, 1625, 1626, 1627, 1628, 1629, 1630, 1631, 1632) in one magnet 162 increases, the number of physical magnets 162 in the rotor 160 decreases. For example, when the number of the polar regions 1622 and 1623 in one magnet 162 is 1, the number of physical magnets 162 of the rotor 160 are needed to be 48, when the number of the polar regions 1624 and 1625 in one magnet 162 is 2, the number of physical magnets 162 of the rotor 160 are needed to be 24, when the number of the polar regions 1626, 1627, and 1628 in one magnet 162 is 3, the number of physical magnets 162 of the rotor 160 are needed to be 16, when the number of the polar regions 1629, 1630, 1631, and 1632 in one magnet 162 is 4, the number of physical magnets 162 of the rotor 160 are needed to be 12, and when the number of the polar regions in one magnet 162 is 6, the number of physical magnets 162 of the rotor 160 are needed to be 8.

As the number of physical magnets 162 of the rotor 160 increases, the number of operations required to attach the magnets 162 to the inside of the rotor core 164 increases, and thus the operation cost increases. In other words, as the number of polar regions (1622, 1623, 1624, 1625, 1626, 1627, 1628, 1629, 1630, 1631, 1632) in one magnet 162 decreases, the manufacturing cost of the rotor 160 increases.

Referring to FIG. 17, it can be seen that the material cost ratio of the motors 150 and 160 to the polar anisotropy coefficient (X) of the magnet 162. The material cost of the motors 150 and 160 may be understood to include the material cost of the stator unit described in FIG. 15 and the manufacturing cost of the rotor 160 described in FIG. 16.

Based on 100% material cost of the motors 150 and 160 in FIG. 17, it can be seen that when the number of the polar regions 1622 and 1623 in one magnet 162 is 1, the polar anisotropy coefficient (X) is 6, when the number of the polar regions 1624 and 1625 is 2, the polar anisotropy coefficient (X) is 4.5, when the number of the polar regions 1626, 1627, and 1628 is 3, the polar anisotropy coefficient (X) is 3.5, and when the number of the polar regions 1629, 1630, 1631, and 1632 is 4, the polar anisotropy coefficient (X) is 2.5.

It can be seen that the material cost of the motors 150 and 160 is reduced by less than 100% when the number of the at least one polar region 1622 and 1623 is 1, the polar anisotropy coefficient (X) exceeds 6, when the number of the at least one polar region 1624 and 1625 is 2, the polar anisotropy coefficient (X) exceeds 4.5, when the number of the at least one polar region 1626, 1627, and 1628 is 3, the polar anisotropy coefficient (X) exceeds 3.5, and when the number of the at least one polar region 1629, 1630, 1631, an 1632 is 4, the polar anisotropy coefficient (X) exceeds 2.5. This means the lowest threshold for setting the polar anisotropy coefficient (X) within the limited material cost of the motors 150 and 160.

Therefore, referring to FIG. 18, considering the limited material cost of the motors 150 and 160 without occurring of cracks in the magnet 162, designing that when the number of the at least one polar region 1622 and 1623 is 1, the polar anisotropy coefficient (X) is between 6 and 7.5, when the number of the at least one polar region 1624 and 1625 is 2, the polar anisotropy coefficient (X) is between 4.5 and 6, when the number of the at least one polar region 1626, 1627, and 1628 is 3, the polar anisotropy coefficient (X) is between 3.5 and 4.5, and when the number of the at least one polar region 1629, 1630, 1631, and 1632 is 4, the polar anisotropy coefficient (X) is between 2.5 and 3.5, can be said to be the orientation of the magnet 162 with the most optimal polar anisotropy coefficient (X).

Some or other embodiments of the present disclosure described above are not exclusive or distinct from one another. Some or other embodiments of the present disclosure described above may be used in combination or combined with each configuration or function.

For example, it means that configuration A described in specific embodiments and/or drawings and configuration B described in other embodiments and/or drawings may be combined. In other words, even when the combination between the components is not described directly, it means that the combination is possible except when it is described as not possible to combine.

The above detailed description should not be construed as limiting in all respects and should be considered as illustrative. The scope of the present disclosure should be determined by reasonable interpretation of the appended claims, and all changes within the scope of the appended claims.

## Claims

1. A magnet comprising:
at least one polar region (1622, 1623, 1624, 1625, 1626, 1627, 1628, 1629, 1630, 1631, 1632) formed in an arc shape and arranged side by side in a circumferential direction,
wherein the at least one polar region (1622, 1623, 1624, 1625, 1626, 1627, 1628, 1629, 1630, 1631, 1632) has a magnetic focus center (b1, b2, b3, b4, b5, b6, b7, b8, b9, b10, b11) that is different from a center (O) of an inner diameter of the at least one polar region (1622, 1623, 1624, 1625, 1626, 1627, 1628, 1629, 1630, 1631, 1632),
the at least one polar region (1622, 1623, 1624, 1625, 1626, 1627, 1628, 1629, 1630, 1631, 1632) satisfies the following equation, $X = \frac{{d}_{m}}{{d}_{b}} ,$
where, dₘ is a distance from a straight line connecting both ends of a magnetic center line of the at least one polar region (1622, 1623, 1624, 1625, 1626, 1627, 1628, 1629, 1630, 1631, 1632) to a central region of the magnetic center line of the at least one polar region (1622, 1623, 1624, 1625, 1626, 1627, 1628, 1629, 1630, 1631, 1632), and d_{b} is a distance from a straight line connecting both ends of a magnetic center line of the at least one polar region (1622, 1623, 1624, 1625, 1626, 1627, 1628, 1629, 1630, 1631, 1632) to a central region of the magnetic center line of the at least one polar region (1622, 1623, 1624, 1625, 1626, 1627, 1628, 1629, 1630, 1631, 1632) when the at least one polar region (1622, 1623, 1624, 1625, 1626, 1627, 1628, 1629, 1630, 1631, 1632) has a magnetic focus center (b1, b2, b3, b4, b5, b6, b7, b8, b9, b10, b11) equal to the center of the inner diameter of the at least one polar region (1622, 1623, 1624, 1625, 1626, 1627, 1628, 1629, 1630, 1631, 1632),
when a number of the at least one polar region (1622, 1623) is 1, X<7.5,
when the number of the at least one polar region (1624, 1625) is 2, X<6,
when the number of the at least one polar region (1626, 1627, 1628) is 3, X<4.5, and
when the number of the at least one polar region (1629, 1630, 1631, 1632) is 4, X<3.5.

2. The magnet of claim 1, wherein the d_{b} satisfies the following equation, ${d}_{b} = \frac{{r}_{i} + {r}_{o}}{2} - \sqrt{{\left(\frac{{r}_{i} + {r}_{o}}{2}\right)}^{2} - {\left(\frac{{r}_{o} - {r}_{i}}{2 p}\right)}^{2}} ,$ where, rᵢ is an inner radius of the at least one polar region (1622, 1623, 1624, 1625, 1626, 1627, 1628, 1629, 1630, 1631, 1632), rₒ is an outer radius of the at least one polar region (1622, 1623, 1624, 1625, 1626, 1627, 1628, 1629, 1630, 1631, 1632), and p is a number of the at least one polar region (1622, 1623, 1624, 1625, 1626, 1627, 1628, 1629, 1630, 1631, 1632).

3. The magnet of claim 1 or 2, wherein,
when the number of the at least one polar region (1622, 1623) is 1, 6<X,
when the number of the at least one polar region (1624, 1625) is 2, 4.5<X,
when the number of the at least one polar region (1626, 1627, 1628) is 3, 3.5<X, and
when the number of the at least one polar region is (1629, 1630, 1631, 1632) 4, 2.5<X.

4. The magnet of any one of preceding claims, wherein the at least one polar region (1622, 1623, 1624, 1625, 1626, 1627, 1628, 1629, 1630, 1631, 1632) is plural, and
distances between each magnetic focus center (b1, b2, b3, b4, b5, b6, b7, b8, b9, b10, b11) and the at least one polar region (1622, 1623, 1624, 1625, 1626, 1627, 1628, 1629, 1630, 1631, 1632) are equal to each other.

5. The magnet of any one of preceding claims, wherein the at least one polar region (1622, 1623, 1624, 1625, 1626, 1627, 1628, 1629, 1630, 1631, 1632) is plural, and
a circumferential distance between the magnetic focus centers (b1, b2, b3, b4, b5, b6, b7, b8, b9, b10, b11) is equal to each other.

6. The magnet of any one of preceding claims, wherein, when the at least one polar region (1622, 1623, 1624, 1625, 1626, 1627, 1628, 1629, 1630, 1631, 1632) is plural, neighboring polar regions (1622, 1623, 1624, 1625, 1626, 1627, 1628, 1629, 1630, 1631, 1632) have different polarities.

7. A motor comprising:
a stator (150); and
a rotor (160) including a rotor core (164) disposed radially outside the stator (150), and a plurality of magnets (162) disposed on an inner surface of the rotor core (164) and facing the stator (150),
wherein the magnet (162) is a magnet according to any one of claims 1 to 6.

8. The motor of claim 7, wherein,
when a number of the at least one polar region (1622, 1623) is 1, a number of the plurality of magnets is 48,
when the number of the at least one polar region (1624, 1625) is 2, the number of the plurality of magnets is 24,
when the number of at least one polar region (1626, 1627, 1628) is 3, the number of the plurality of magnets is 24, and
when the number of the at least one polar region (1629, 1630, 1631, 1632) is 4, the number of the plurality of magnets is 12.

9. A washing machine comprising the motor according to claim 7 or 8.

## Patentansprüche

1. Magnet, umfassend:
zumindest einen Polbereich (1622, 1623, 1624, 1625, 1626, 1627, 1628, 1629, 1630, 1631, 1632), der in einer Bogenform ausgebildet ist und in einer Umfangsrichtung nebeneinander angeordnet ist,
wobei der zumindest eine Polbereich (1622, 1623, 1624, 1625, 1626, 1627, 1628, 1629, 1630, 1631, 1632) ein magnetisches Fokuszentrum (b1, b2, b3, b4, b5, b6, b7, b8, b9, b10, b11) aufweist, das von einem Mittelpunkt (O) eines Innendurchmessers des zumindest einen Polbereichs (1622, 1623, 1624, 1625, 1626, 1627, 1628, 1629, 1630, 1631, 1632) verschieden ist,
wobei der zumindest eine Polbereich (1622, 1623, 1624, 1625, 1626, 1627, 1628, 1629, 1630, 1631, 1632) die folgende Gleichung erfüllt, $X = \frac{{d}_{m}}{{d}_{b}}$
wobei dₘ ein Abstand von einer geraden Linie, die beide Enden einer magnetischen Mittellinie des zumindest einen Polbereichs (1622, 1623, 1624, 1625, 1626, 1627, 1628, 1629, 1630, 1631, 1632) verbindet, zu einem zentralen Bereich der magnetischen Mittellinie des zumindest einen Polbereichs (1622, 1623, 1624, 1625, 1626, 1627, 1628, 1629, 1630, 1631, 1632) ist, und d_{b} ein Abstand von einer geraden Linie, die beide Enden einer magnetischen Mittellinie des zumindest einen Polbereichs (1622, 1623, 1624, 1625, 1626, 1627, 1628, 1629, 1630, 1631, 1632) verbindet, zu einem zentralen Bereich der magnetischen Mittellinie des zumindest einen Polbereichs (1622, 1623, 1624, 1625, 1626, 1627, 1628, 1629, 1630, 1631, 1632) ist, wenn der zumindest eine Polbereich (1622, 1623, 1624, 1625, 1626, 1627, 1628, 1629, 1630, 1631, 1632) ein magnetisches Fokuszentrum (b1, b2, b3, b4, b5, b6, b7, b8, b9, b10, b11) aufweist, das gleich dem Mittelpunkt des Innendurchmessers des zumindest einen Polbereichs (1622, 1623, 1624, 1625, 1626, 1627, 1628, 1629, 1630, 1631, 1632) ist,
wenn eine Anzahl des zumindest einen Polbereichs (1622, 1623) 1 ist, X < 7,5,
wenn die Anzahl des zumindest einen Polbereichs (1624, 1625) 2 ist, X < 6,
wenn die Anzahl des zumindest einen Polbereichs (1626, 1627, 1628) 3 ist, X < 4,5, und
wenn die Anzahl des zumindest einen Polbereichs (1629, 1630, 1631, 1632) 4 ist, X < 3,5.

2. Magnet nach Anspruch 1, wobei d_{b} die folgende Gleichung erfüllt, ${d}_{b} = \frac{{r}_{i} + {r}_{0}}{2} - \sqrt{{\left(\frac{{r}_{i} + {r}_{0}}{2}\right)}^{2} - {\left(\frac{{r}_{0} - {r}_{i}}{2 p}\right)}^{2}}$ wobei rᵢ ein Innenradius des zumindest einen Polbereichs (1622, 1623, 1624, 1625, 1626, 1627, 1628, 1629, 1630, 1631, 1632) ist, r₀ ein Außenradius des zumindest einen Polbereichs (1622, 1623, 1624, 1625, 1626, 1627, 1628, 1629, 1630, 1631, 1632) ist, und p eine Anzahl des zumindest einen Polbereichs (1622, 1623, 1624, 1625, 1626, 1627, 1628, 1629, 1630, 1631, 1632) ist.

3. Magnet nach Anspruch 1 oder 2, wobei,
wenn die Anzahl des zumindest einen Polbereichs (1622, 1623) 1 ist, 6 < X,
wenn die Anzahl des zumindest einen Polbereichs (1624, 1625) 2 ist, 4,5 < X,
wenn die Anzahl des zumindest einen Polbereichs (1626, 1627, 1628) 3 ist, 3,5 < X, und
wenn die Anzahl des zumindest einen Polbereichs (1629, 1630, 1631, 1632) 4 ist, 2,5 < X.

4. Magnet nach einem der vorstehenden Ansprüche, wobei der zumindest eine Polbereich (1622, 1623, 1624, 1625, 1626, 1627, 1628, 1629, 1630, 1631, 1632) in Mehrzahl vorhanden ist, und
Abstände zwischen jedem magnetischen Fokuszentrum (b1, b2, b3, b4, b5, b6, b7, b8, b9, b10, b11) und dem zumindest einen Polbereich (1622, 1623, 1624, 1625, 1626, 1627, 1628, 1629, 1630, 1631, 1632) einander gleich sind.

5. Magnet nach einem der vorstehenden Ansprüche, wobei der zumindest eine Polbereich (1622, 1623, 1624, 1625, 1626, 1627, 1628, 1629, 1630, 1631, 1632) in Mehrzahl vorhanden ist, und
ein Umfangsabstand zwischen den magnetischen Fokuszentren (b1, b2, b3, b4, b5, b6, b7, b8, b9, b10, b11) einander gleich ist.

6. Magnet nach einem der vorstehenden Ansprüche, wobei, wenn der zumindest eine Polbereich (1622, 1623, 1624, 1625, 1626, 1627, 1628, 1629, 1630, 1631, 1632) in Mehrzahl vorhanden ist, benachbarte Polbereiche (1622, 1623, 1624, 1625, 1626, 1627, 1628, 1629, 1630, 1631, 1632) unterschiedliche Polaritäten aufweisen.

7. Motor, umfassend:
einen Stator (150); und
einen Rotor (160), der einen Rotorkern (164), der radial außerhalb des Stators (150) angeordnet ist, und eine Mehrzahl von Magneten (162), die auf einer Innenfläche des Rotorkerns (164) angeordnet sind und dem Stator (150) zugewandt sind, aufweist,
wobei der Magnet (162) ein Magnet nach einem der Ansprüche 1 bis 6 ist.

8. Motor nach Anspruch 7, wobei,
wenn eine Anzahl des zumindest einen Polbereichs (1622, 1623) 1 ist, eine Anzahl der Mehrzahl von Magneten 48 ist,
wenn die Anzahl des zumindest einen Polbereichs (1624, 1625) 2 ist, die Anzahl der Mehrzahl von Magneten 24 ist,
wenn die Anzahl des zumindest einen Polbereichs (1626, 1627, 1628) 3 ist, die Anzahl der Mehrzahl von Magneten 24 ist, und
wenn die Anzahl des zumindest einen Polbereichs (1629, 1630, 1631, 1632) 4 ist, die Anzahl der Mehrzahl von Magneten 12 ist.

9. Waschmaschine, umfassend den Motor nach Anspruch 7 oder 8.

## Revendications

1. Aimant comprenant :
au moins une région polaire (1622, 1623, 1624, 1625, 1626, 1627, 1628, 1629, 1630, 1631, 1632) formée en une forme d'arc et agencée côte à côte dans une direction circonférentielle,
dans lequel ladite au moins une région polaire (1622, 1623, 1624, 1625, 1626, 1627, 1628, 1629, 1630, 1631, 1632) présente un centre de focalisation magnétique (b1, b2, b3, b4, b5, b6, b7, b8, b9, b10, b11) qui est différent d'un centre (O) d'un diamètre intérieur de ladite au moins une région polaire (1622, 1623, 1624, 1625, 1626, 1627, 1628, 1629, 1630, 1631, 1632),
ladite au moins une région polaire (1622, 1623, 1624, 1625, 1626, 1627, 1628, 1629, 1630, 1631, 1632) satisfaisant l'équation suivante, $X = \frac{{d}_{m}}{{d}_{b}}$
où dₘ est une distance depuis une ligne droite reliant les deux extrémités d'une ligne médiane magnétique de ladite au moins une région polaire (1622, 1623, 1624, 1625, 1626, 1627, 1628, 1629, 1630, 1631, 1632) jusqu'à une région centrale de la ligne médiane magnétique de ladite au moins une région polaire (1622, 1623, 1624, 1625, 1626, 1627, 1628, 1629, 1630, 1631, 1632), et d_{b} est une distance depuis une ligne droite reliant les deux extrémités d'une ligne médiane magnétique de ladite au moins une région polaire (1622, 1623, 1624, 1625, 1626, 1627, 1628, 1629, 1630, 1631, 1632) jusqu'à une région centrale de la ligne médiane magnétique de ladite au moins une région polaire (1622, 1623, 1624, 1625, 1626, 1627, 1628, 1629, 1630, 1631, 1632) lorsque ladite au moins une région polaire (1622, 1623, 1624, 1625, 1626, 1627, 1628, 1629, 1630, 1631, 1632) présente un centre de focalisation magnétique (b1, b2, b3, b4, b5, b6, b7, b8, b9, bl0, b11) égal au centre du diamètre intérieur de ladite au moins une région polaire (1622, 1623, 1624, 1625, 1626, 1627, 1628, 1629, 1630, 1631, 1632),
lorsqu'un nombre de ladite au moins une région polaire (1622, 1623) est 1, X < 7,5,
lorsque le nombre de ladite au moins une région polaire (1624, 1625) est 2, X < 6,
lorsque le nombre de ladite au moins une région polaire (1626, 1627, 1628) est 3, X < 4,5, et
lorsque le nombre de ladite au moins une région polaire (1629, 1630, 1631, 1632) est 4, X < 3,5.

2. Aimant selon la revendication 1, dans lequel d_{b} satisfait l'équation suivante, ${d}_{b} = \frac{{r}_{i} + {r}_{0}}{2} - \sqrt{{\left(\frac{{r}_{i} + {r}_{0}}{2}\right)}^{2} - {\left(\frac{{r}_{0} - {r}_{i}}{2 p}\right)}^{2}}$ où rᵢ est un rayon intérieur de ladite au moins une région polaire (1622, 1623, 1624, 1625, 1626, 1627, 1628, 1629, 1630, 1631, 1632), r₀ est un rayon extérieur de ladite au moins une région polaire (1622, 1623, 1624, 1625, 1626, 1627, 1628, 1629, 1630, 1631, 1632), et p est un nombre de ladite au moins une région polaire (1622, 1623, 1624, 1625, 1626, 1627, 1628, 1629, 1630, 1631, 1632).

3. Aimant selon la revendication 1 ou 2, dans lequel,
lorsque le nombre de ladite au moins une région polaire (1622, 1623) est 1, 6 < X,
lorsque le nombre de ladite au moins une région polaire (1624, 1625) est 2, 4,5 < X,
lorsque le nombre de ladite au moins une région polaire (1626, 1627, 1628) est 3, 3,5 < X, et
lorsque le nombre de ladite au moins une région polaire (1629, 1630, 1631, 1632) est 4, 2,5 < X.

4. Aimant selon l'une quelconque des revendications précédentes, dans lequel ladite au moins une région polaire (1622, 1623, 1624, 1625, 1626, 1627, 1628, 1629, 1630, 1631, 1632) est présente en pluralité, et
des distances entre chaque centre de focalisation magnétique (b1, b2, b3, b4, b5, b6, b7, b8, b9, b10, b11) et ladite au moins une région polaire (1622, 1623, 1624, 1625, 1626, 1627, 1628, 1629, 1630, 1631, 1632) sont égales les unes aux autres.

5. Aimant selon l'une quelconque des revendications précédentes, dans lequel ladite au moins une région polaire (1622, 1623, 1624, 1625, 1626, 1627, 1628, 1629, 1630, 1631, 1632) est présente en pluralité, et
une distance circonférentielle entre les centres de focalisation magnétique (b1, b2, b3, b4, b5, b6, b7, b8, b9, b10, b11) est égale entre eux.

6. Aimant selon l'une quelconque des revendications précédentes, dans lequel, lorsque ladite au moins une région polaire (1622, 1623, 1624, 1625, 1626, 1627, 1628, 1629, 1630, 1631, 1632) est présente en pluralité, des régions polaires voisines (1622, 1623, 1624, 1625, 1626, 1627, 1628, 1629, 1630, 1631, 1632) présentent des polarités différentes.

7. Moteur comprenant :
un stator (150) ; et
un rotor (160) comprenant un noyau de rotor (164) disposé radialement à l'extérieur du stator (150), et une pluralité d'aimants (162) disposés sur une surface intérieure du noyau de rotor (164) et faisant face au stator (150),
dans lequel l'aimant (162) est un aimant selon l'une quelconque des revendications 1 à 6.

8. Moteur selon la revendication 7, dans lequel,
lorsqu'un nombre de ladite au moins une région polaire (1622, 1623) est 1, un nombre de ladite pluralité d'aimants est 48,
lorsque le nombre de ladite au moins une région polaire (1624, 1625) est 2, le nombre de ladite pluralité d'aimants est 24,
lorsque le nombre de ladite au moins une région polaire (1626, 1627, 1628) est 3, le nombre de ladite pluralité d'aimants est 24, et
lorsque le nombre de ladite au moins une région polaire (1629, 1630, 1631, 1632) est 4, le nombre de ladite pluralité d'aimants est 12.

9. Machine à laver comprenant le moteur selon la revendication 7 ou 8.
